# EUROPEAN PATENT SPECIFICATION

(11) **EP 0 340 914 B1**
(45) Date of publication and mention of the grant of the patent: **31.03.1993**
(21) Application number: 89303410.8
(22) Date of filing: 06.04.1989
(51) Int. Cl.: B01D 61/00, B01D 29/39

(54) **Filter**
Filter
Filtre

(30) Priority: 14.04.1988 US 181417
(43) Date of publication of application: 08.11.1989
(73) Proprietor: Nalge Company, Rochester New York 15602 (US)
(72) Inventor: Leoncavallo, Richard Anthony, Pittsford, New York 14534 (US); Phillips, Gregory Robert, Penfield, New York 14526 (US)
(74) Representative: Ackroyd, Robert

(56) References cited:
- DE-B- 1 014 522
- FR-A- 2 325 411
- FR-A- 2 405 733

## Description

This invention relates to filtration and more particularly to a filter assembly.

In order to obtain large flows through filters with relatively fine pores, for example, below 1 µm (1 micron), filter membranes having relatively large areas are necessary. Typically, this has been provided by using a number of small individual filters in parallel. Additionally, in prior art, a filter unit has been suggested which has a plurality of stacked discs disposed in it, where a filter membrane is bonded to the upper and lower surface of each disc and passages are provided in the disc to a common central position opening which is connected to an exhaust port. An example is given in US-A-4501663, which discloses a two-piece disc assembly used to support two members. Each half is relatively complex in structure and requires a substantial amount of time to mould. A single disc support structure is also disclosed, which is relatively complex in configuration and requires a relatively expensive mould to produce. Additionally, this structure requires the use of two differently sized membranes and is relatively inefficient with regard to the use of membrane filters.

According to the invention, there is provided a filter comprising a housing having a filter chamber, an inlet port for allowing entry of a liquid to be filtered, filter means disposed in the filter chamber for filtering a liquid supplied to the chamber through the inlet port, and an exhaust port for discharge of filtered liquid, the filter means comprising at least one disc-shaped filter assembly comprising:
an annular support disc having a first membrane support surface, a central axial opening communicating with the exhaust port, a second membrane support surface, and first and second filter membranes disposed on the first and second support surfaces respectively, each membrane support surface having grooves therein for channelling filtered liquid having passed through the filter membranes inwardly towards the central opening of the annular support disc, the filter means including sealing means forming a closed flow path for filtered liquid to the exhaust port,
the filter assembly being characterised in that
the grooves in each support surface comprise a plurality of annular primary grooves and a plurality of main radially-extending collection grooves for collecting liquid from the primary grooves, the annular support disc having at least one axial slot which connects a collection groove in the first support surface with a collection groove in the second support surface and is in communication with the central opening of the disc to form a part of the flow path for filtered liquid,
and by
an alignment member having first and second opposed surfaces and a central axial opening, the first surface mating with the second surface of the support disc with the central axial opening being in communication with the axial opening of the support disc and forming a part of the flow path for filtered liquid.

Preferred features are given in the dependent Claims.

Principal objects of the invention accordingly are to provide a filter assembly which is relatively inexpensive to manufacture, easy to assemble and provides for efficient use of filter membranes.

This filter can advantageously be disposable.

Embodiments of the invention will be described by way of example, with reference to the drawings, in which:
Figure 1 is a side elevational view of filter made in accordance with the present invention;
Figure 2 is a top plan view of the filter of Figure 1;
Figure 3 is a cross-sectional view taken along the line 3-3 of Figure 2;
Figure 4 is an enlarged partial sectional view of the filter of Figure 3;
Figure 5 is a top plan view of the disc support structure for supporting a filter membrane of the filter of the present invention, with the membrane removed;
Figure 6 is a bottom plan view of the disc support structure of Figure 5, with the membrane removed;
Figure 7 is a top plan view of a spacer used with the support structure;
Figure 8 is a cross-sectional view of the spacer of Figure 7 along the line 7-7;
Figure 9 is a bottom plan view of the spacer of Figure 7; and
Figure 10 is a cross-sectional view of a modified embodiment of a filter made in accordance with the present invention.

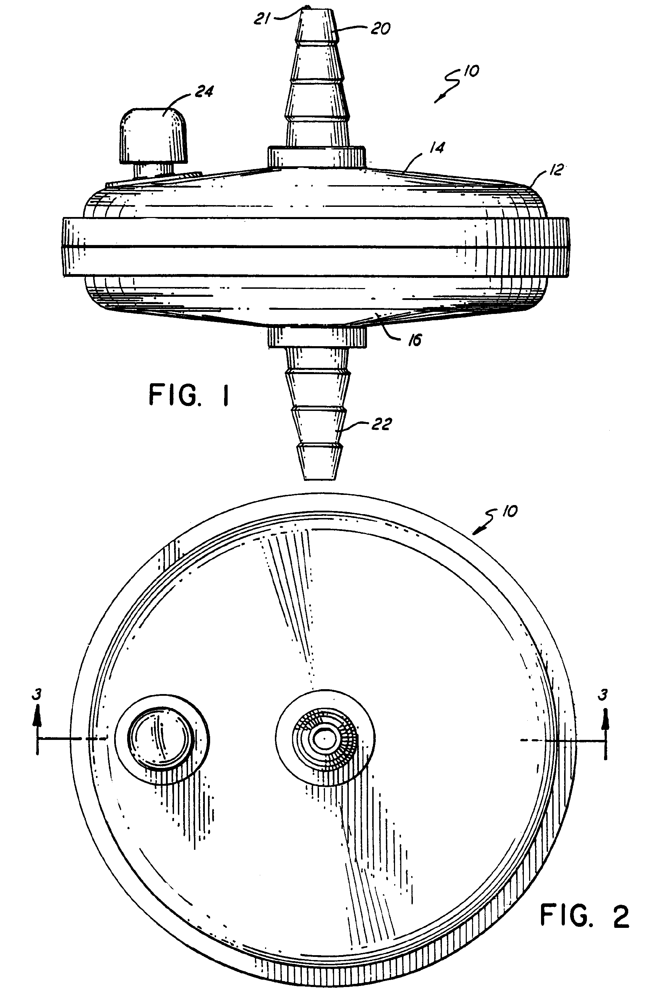

Referring to Figures 1, 2 and 3, a filter assembly 10 is shown, which comprises a housing 12 made out of an appropriate plastics material. In the embodiment illustrated, the housing 12 is made of polycarbonate. The housing 12 comprises a moulded upper section 14 and a moulded lower section 16, which are welded together to form a sealed filtering chamber 18. The upper section 14 is provided with an inlet having an opening 21 for allowing liquid to be filtered to enter the filtering chamber 18. The lower section 16 has an outlet 22 having an opening 23 for allowing discharge of a filtrate which has been filtered in the filtering chamber 18. Preferably, the inlet 20 and the outlet 22 are formed integrally with the upper section 14 and the lower section 16, respectively, as illustrated.

The upper section 14 is provided with vent means 24 for allowing removal of trapped air or gas within the filtering chamber 18. The vent means 24 may take a variety of configurations and, in the particular embodiment illustrated, the vent means 24 comprise a stem member 25 which is formed integrally with the upper section 14. The stem member 25 has a bore 28 which extends therethrough into the filtering chamber 18. A cap 30 is provided for controlling the flow of trapped air out of the filtering chamber 18. The details of construction of the vent means 24 may be found in EP-A-0 337 663. However, it is understood that other suitable vent means may be provided; if desired, vent means need not be provided.

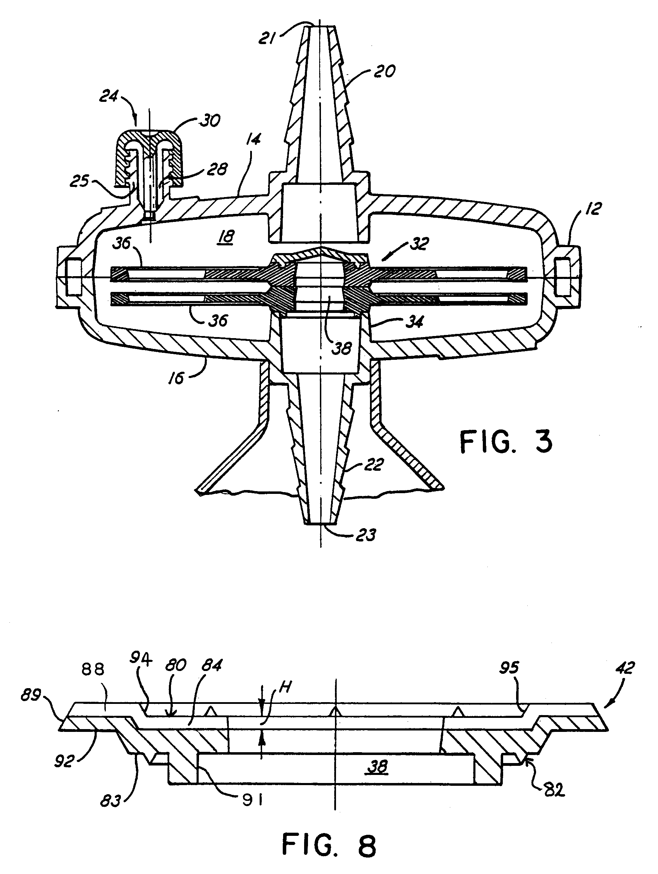

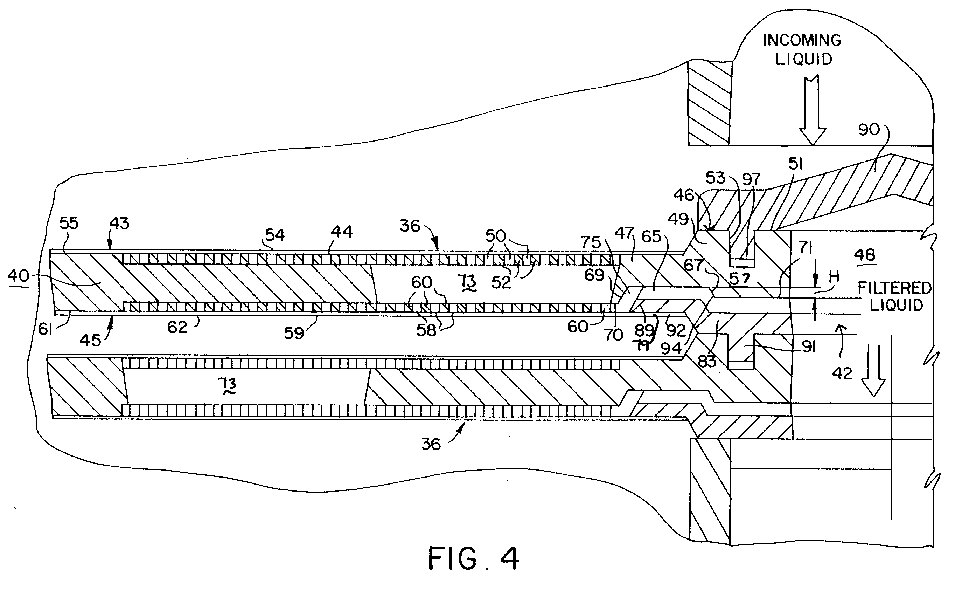

Referring to Figures 3 to 9, the structural features of the filter assembly 10 of this invention are illustrated in further detail. Disposed within the filtering chamber 18 are filtering means 32 which filter a liquid entering through the inlet 20 and allows discharge of the filtrate to the outlet 22. The filtering means 32 are secured to an annular boss 34 which is formed integrally in the lower section 16 and which is in communication with the outlet 22. The filter means 32 are preferably made of a plastics material and are preferably welded to the boss 34 to prevent any unfiltered liquid from leaving the outlet 22.

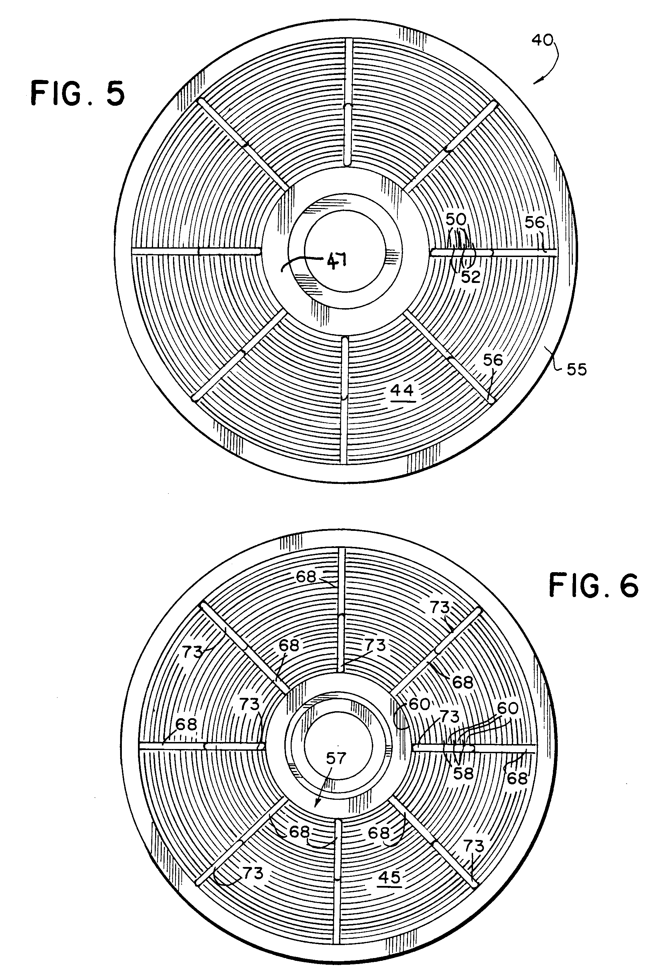

In the embodiment illustrated, the filtering means 32 comprise at least one filter support assembly 36 having a central opening 38 for communicating with the outlet 22. The filter support assembly 36 comprises an annular membrane support disc 40 and an aligning spacer 42 for mating with the annular membrane support disc 40. The membrane support disc 40 has a top surface 43 and a bottom surface 45. The top surface 43 has a membrane support surface 44 and a central portion 46 having an axial opening 48 which forms part of the central opening 38 for communicating with the outlet 22. The membrane support surface 44 has an inner annular land 47 which supports the inner periphery of a filter membrane 54 placed on the top support surface 44 and a continuous outer annular land 55 for supporting the outer periphery of the membrane 54. In Figure 5, the membrane 54 is removed to show the top surface 43 clearly. The membrane 54 is secured continuously about its inner and outer peripheries to the lands 47, 55, respectively, so as to provide a seal at the inner and outer peripheries. Preferably, the membrane 54 is secured by welding the membrane 54 to the lands 47, 55. The top membrane support surface 44 between the lands 47 and 55 is provided with a plurality of circumferentially-extending grooves 50, which form between them a plurality of ribs 52 which support the central portion of the filter membrane 54. The ribs 52 are preferably designed so as to minimise contact with the filter membrane 54, so as to maximise the surface area for filtering a liquid. The top surface 44 is further provided with a plurality of spaced radially-extending collection grooves 56 for collecting the filtrate which has been filtered through the membrane 54 by the grooves 50.

The central portion 46 of the support disc 40 is provided with a raised annular section 49 having a substantially flat mating surface 51. A recess 53 is provided in the flat surface 51 for receiving a projection from an adjacent filter support assembly 36 or a sealing cap 90, which is described below.

The bottom surface 45 of the support disc 40 is provided with a continuous outer annular land 61 disposed substantially opposite the land 55, a central portion 59 disposed substantially opposite the grooves 50 and an inner section 57 disposed radially inwardly of the central portion 59. The central portion 59 is provided with a plurality of circumferentially-extending grooves 58 disposed radially inwardly of the land 61, which form a plurality of membrane-supporting ribs 60, which are designed for supporting a filter membrane 62 secured to the bottom surface 45. In Figure 6, the membrane 62 is removed so as to show the bottom surface 45 clearly. The outer land 61 supports the outer periphery of the filter membrane 62, which is preferably welded about the periphery to the land 61.

A plurality of radially-extending collection grooves 68 are provided which connect the grooves 58 so as to be able to collect the filtrate which is received in each of the grooves 58. The radially outer portion of the inner section 57 adjacent the radially innermost rib 60 in the central section 59 has a recess 65 which forms an annular inner shoulder 67 and an annular outer shoulder 69. The top surface 70 of the shoulder 69 preferably starts at the base 75 of the grooves 58. The inner section 57 adjacent the inner shoulder 67 is provided with a substantially flat mating surface 71. The mating surface 71 is raised above the recess 65 to a height H.

A plurality of axially-extending grooves or slots 73 are preferably placed equidistant form one another about the circumference of the support disc 40, to connect the collection grooves 56 of the top surface with the collection grooves 68 of the bottom surface. In the embodiment illustrated, there are eight grooves 73. Preferably, each groove 73 extends for about half of the length of the radial collection grooves 56, 68 and the grooves 73 are alternately located in the radially inner half or radially outer half of the grooves 56, 68, as shown in Figure 6.

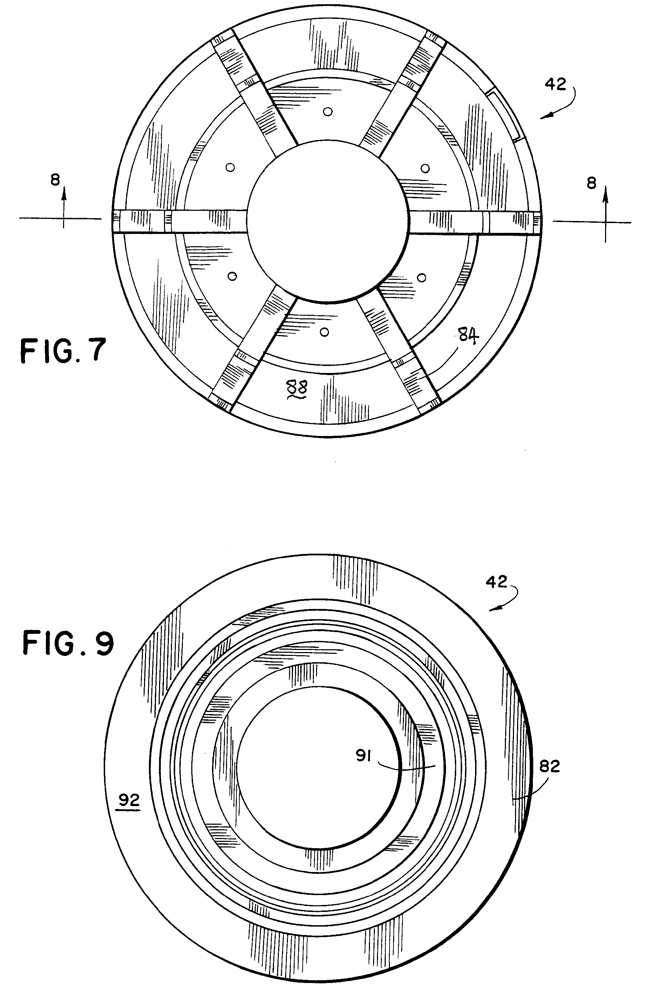

Referring to Figures 7 and 8, the aligning spacer 42 is provided with a top surface 80 and a bottom surface 82, for location against the flat mating surface 51 of the raised annular section 49 of the disc 40. The top surface 80 has a configuration which is substantially complementary to the oppositely-disposed bottom surface of the inner section 57 of the bottom surface of the support disc 40. The top surface 80 is provided with a plurality of spaced radially-extending ribs 84, which also have a height H and which mate with the bottom surface 71 of the inner section 57 of the bottom surface 45 and which additionally form a plurality of radially-extending passages 88. The radially outer end 89 of the spacer 42 is spaced from the outer shoulder 69, so as to provide an annular groove 75 for collection of the filtrate from the collection grooves 68. The passages 88 connect the annular groove 75 to the central opening 38 to allow the filtrate to leave the outlet 22.

The outer surfaces of the ribs 84 are each provided with a ridge 94 which matingly engages the inner shoulder 67 of the recess 65. This allows the spacer 42 to be self-aligning with respect to the support disc 40 and provides a significant advantage in manufacturing the spacer 42. The bottom surface 82 of the spacer 42 is provided with an annular supporting land 92, which lies in the same plane as the tops of the ribs 60 and the outer land 61 for supporting the annular inner periphery 79 of the membrane 62. Preferably, the membrane 62 is welded to the land 92. Radially inward of the land 92 and adjacent thereto on the bottom surface 82 is a raised section 83. Extending from the raised section 83 is an annular projection 91 which is designed to be received in the recess 53 of the central portion 46 of an adjacent filter support assembly 36. Preferably, the projection 91 is hermetically sealed to the disc 40. In the embodiment illustrated, the projection 91 is welded to the disc 40. Alternatively, the projection 91 may be used to mate with the annular boss 34, so as to assist in providing a seal between the filter means 32 and the boss 34.

The spacer 42 is substantially smaller in size and not as complex in configuration as the membrane support disc 40, thus requiring substantially less moulding time to manufacture and a relatively simple mould configuration. The applicants, as a result of the configuration of the disc assembly, have been able to use about 25 cm² per membrane, compared with 50 cm² per disc 40.

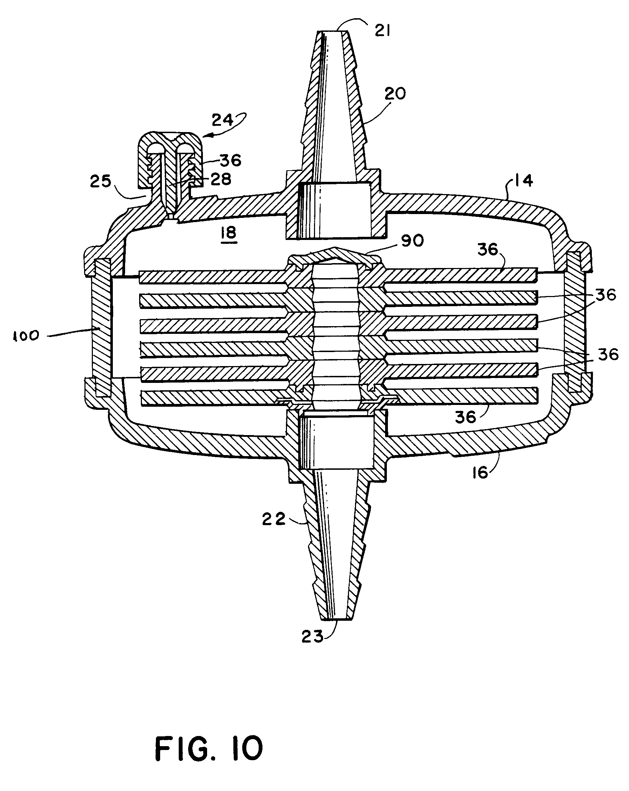

Although in the embodiment illustrated, only two filter support assemblies are shown, it should however be understood that as many filter support assemblies 36 may be provided as desired. For example, six (6) filter support assemblies 36 may be provided, as illustrated in Figure 10, as described below.

The uppermost filter support assembly 36 is provided with a sealing cap 90 for preventing an unfiltered liquid from entering the bore 38 of the filter means 32. As illustrated, the cap 90 is provided with an annular projection 97 for mating with the recess 53 of the central portion 46 in the support disc 40. Preferably, the cap 90 is welded to the central portion 46.

Referring to Figure 10, this shows a modified filter assembly, with like parts to the first embodiment being denoted by like numerals. The difference between this embodiment and the first embodiment is that six (6) filter support assemblies 36 are provided instead of the two previously described. In this embodiment, an annular spacer 100 is provided between the upper section 14 and the lower section 16 of the housing 12. The spacer 100 is welded along its periphery to the upper and lower sections 14, 16. The spacer 100 may be made to any desired size, so as to accommodate any desired number of filter support assemblies.

While the foregoing has been described in order to illustrate the present invention, various changes and modifications may be made without departing form the scope of the present invention. For example, but not by way of limitation, although the discs 40 of the above embodiments are circular, they may have any other shape, typically a geometric shape such as rectangular, square, etc.

The scope of the present invention is defined by the claims.

The filter of this invention is especially useful to filter substances from a pure or colloidal solution under pressure. Also, it can advantageously be disposable, so that it can be replaced easily after use.

## Claims

1. A filter comprising a housing (12) having a filter chamber (18), an inlet port (21) for allowing entry of a liquid to be filtered, filter means disposed in the filter chamber for filtering a liquid supplied to the chamber through the inlet port, and an exhaust port (22) for discharge of filtered liquid, the filter means comprising at least one disc-shaped filter support assembly 36 comprising:
an annular support disc (40) having a first membrane support surface (43), a central axial opening (48) communicating with the exhaust port, a second membrane support surface (45), and first and second filter membranes (54,62) disposed on the first and second support surfaces respectively, each membrane support surface having grooves therein for channelling filtered liquid having passed through the filter membranes inwardly towards the central opening of the annular support disc, the filter means including sealing means forming a closed flow path for filtered liquid to the exhaust port,
the filter support assembly (36) being characterised in that
the grooves in each support surface (43,45) comprise a plurality of annular primary grooves (50,58) and a plurality of main radially-extending collection grooves (56,68) for collecting liquid from the primary grooves, the annular support disc (40) having at least one axial slot (73) which connects a collection groove (56) in the first support surface with a collection groove (68) in the second support surface and is in communication with the central opening of the disc to form a part of the flow path for filtered liquid,
and by
an alignment member (42) having first and second opposed surfaces and a central axial opening, the first surface mating with the second surface of the support disc (40) with the central axial opening being in communication with the axial opening of the support disc and forming a part of the flow path for filtered liquid.

2. A filter according to claim 1, in which the first surface of the alignment member has a plurality of radially extending ribs (84) which abut the second surface of the annular support disc to form a plurality of radially-extending passages (88) which form part of the flow path for filtered liquid.

3. A filter according to claim 1 or 2, in which the alignment member has on its second surface stacking means for engagement with the first surface of the support disc of a further said filter assembly.

4. A filter according to claim 3, in which the stacking means comprise an annular projection (91) on the second surface of the alignment member and an annular recess (53) in the first surface of the support disc (30), the recess being shaped to receive the projection, whereby the filter assembly can be stacked with one or more further said filter assemblies.

5. A filter according to any preceding claim, in which the alignment member (42) has alignment means for mating with the annular support disc (40), the alignment means comprising abutments (94) on the first surface of the alignment member abutting an annular shoulder (67) on the second surface of the support disc.

6. A filter according to any preceding claim, in which the first filter membrane (54) is sealed at its outer and inner peripheries to respective annular portions (55,47) of the first membrane support surface (43).

7. A filter according to any preceding claim, in which the second filter membrane (62) is sealed at its outer periphery to an annular portion (61) of the second membrane support surface (45) and at its inner periphery to an annular portion (92) of the second surface (82) of the alignment member (42).

8. A filter according to any preceding claim, in which the flow path for filtered liquid includes an annular channel (75) formed between the outer periphery (89) of the alignment member and a facing portion (69) of the second surface (43) of the support disc (40).

9. A filter according to any preceding claim, in which the filter means is formed by a stack of two or more said filter assemblies, the central axial openings of the support discs and the alignment members forming a part of the flow path for filtered liquid.

## Patentansprüche

1. Filter mit einem Gehäuse (12), das eine Filterkammer (18), eine den Einlaß der zu filternden Flüssigkeit ermöglichende Einlaßöffnung (21), weiterhin in der Filterkammer angeordnete Filtermittel zum Filtern einer der Kammer durch die Einlaßöffnung zugeführten Flüssigkeit und eine Auslaßöffnung (22) zum Auslaß der gefilterten Flüssigkeit aufweist, wobei die Filtermittel aus wenigstens einem scheibenförmigen Filtertragkörper (36) bestehen, der seinerseits enthält:
eine ringförmige Tragscheibe (40), die eine erste Membranstützfläche (43), eine mit der Auslaßöffnung in Verbindung stehende zentrale axial verlaufenden Öffnung (48), eine zweite Membranstützfläche (45) sowie erste und zweite auf den entsprechenden Stützflächen aufliegende Filtermembranen (54,62) besitzt, wobei in jeder Membranstützfläche Rinnen zum Ableiten der die Filtermembranen passiert habenden, gefilterten Flüssigkeit zu der zentralen Öffnung der ringförmigen Tragscheibe vorgesehen sind und die Filtermittel Dichtmittel enthalten, die für einen abgedichteten Durchfluß der filtrierten Flüssigkeit zur Auslaßöffnung sorgen,
wobei der Filtertragkörper (36) dadurch gekennzeichnet ist,
daß die Rinnen in jeder Stützfläche (43,45) aus einer Vielzahl ringförmiger erster Rinnen (50,58) und einer Vielzahl von sich hauptsächlich radial erstreckenden Sammelrinnen (56,68) zum Sammeln der Flüssigkeit aus den ersten Rinnen bestehen, und daß die ringförmige Tragscheibe (40) wenigstens einen axial verlaufenden Schlitz (73) aufweist, der eine Sammelrinne (56) in der ersten Stützfläche mit einer Sammelrinne (68) in der zweiten Stützfläche verbindet und mit der zentralen Öffnung der Scheibe zur Bildung eines Teiles des Stromlaufs für die gefilterte Flüssigkeit verbunden ist,
und daß weiterhin ein Ausrichtungsglied (42) vorhanden ist, das erste und zweite entgegengesetzte Oberflächen und eine zentrale axial verlaufende Öffnung besitzt, wobei die erste Oberfläche mit der zweiten Stützfläche der Tragscheibe (40) und die zentrale axial verlaufende Öffnung mit der axial verlaufenden Öffnung der Tragscheibe passend verbunden sind und damit einen Teil des Strompfades für die gefilterte Flüssigkeit bilden.

2. Filter nach Anspruch 1, bei welchem die erste Oberfläche des Ausrichtungsgliedes eine Mehrzahl von sich radial erstreckenden Rippen (84) aufweist, die an der zweiten Stützfläche der ringförmigen Tragscheibe anliegen, um eine Mehrzahl von sich radial erstreckenden Kanälen (88) zu bilden, die einen Teil des Strompfades für die gefilterte Flüssigkeit bilden.

3. Filter nach Anspruch 1 oder 2, in welchem das Ausrichtungsglied auf seiner zweiten Oberfläche Stapelmittel aufweist, die zum Eingriff mit der ersten Stützfläche der Tragscheibe eines weiteren vorerwähnten Filtertragkörpers dienen.

4. Filter nach Anspruch 3, bei dem die Stapelmittel aus einem ringförmigen Vorsprung (91) auf der zweiten Oberfläche des Ausrichtungsgliedes und einer ringförmigen Nut (53) in der ersten Stützfläche der Tragscheibe (40) bestehen, wobei die Nut so geformt ist, daß sie den Vorsprung aufnimmt, wodurch ein Filtertragkörper mit einem oder mehreren weiterer Filtertragkörper gestapelt werden kann.

5. Filter nach einem vorhergehenden Anspruch, bei dem das Ausrichtungsglied (42) Ausrichtungsmittel zum Anpassen an die ringförmige Tragscheibe (40) besitzt und diese Ausrichtungsmittel aus Vorsprüngen (94) auf der ersten Oberfläche des Ausrichtungsgliedes bestehen, die an einer ringförmigen Schulter (67) auf der zweiten Stützfläche der Tragscheibe anliegen.

6. Filter nach einem vorhergehenden Anspruch, bei dem die erste Filtermembran (54) an ihrem äußeren und inneren Umfang an entsprechenden ringförmigen Teilen (55,47) der ersten Membranstützfläche (43) abgedichtet ist.

7. Filter nach einem vorerwähnten Anspruch, bei dem die zweite Filtermembran (62) mit ihrem Außenumfang an einem ringförmigen Teil (61) der zweiten Membranstützfläche (45) und mit ihrem Innenumfang an dem ringförmigen Teil (92) der zweiten Oberfläche (82) des Ausrichtungsgliedes (42) abgedichtet ist.

8. Filter nach einem vorhergehenden Anspruch, bei dem der Strompfad für die filtrierte Flüssigkeit einen ringförmigen Kanal (75) enthält, der zwischen dem Außenumfang (89) des Ausrichtungsgliedes und einem ihm gegenüberliegenden Teil (69) der zweiten Stützfläche (43) der Tragscheibe (40) liegt.

9. Filter nach einem vorerwähnten Anspruch, bei dem die Filtermittel aus einem Stapel von zwei oder mehren der erwähnten Filtertragkörper bestehen, wobei die zentralen axial verlaufenden Öffnungen der Tragscheiben und der Ausrichtungsglieder einen Teil des Strompfades für die gefilterte Flüssigkeit bilden.

## Revendications

1. Filtre comprenant un corps creux (12) qui définit une chambre de filtre (18), un orifice d'entrée (21) pour permettre l'entrée d'un liquide à filtrer, des moyens de filtration disposés dans la chambre de filtre pour filtrer un liquide introduit dans la chambre par l'orifice d'entrée, et un orifice de sortie (22) pour évacuer le liquide filtré, les moyens de filtration comprenant au moins un élément filtrant en forme de disque (36) constitué de :
un disque support annulaire (40) ayant une première surface d'appui de membrane (43), une ouverture centrale axiale (48) en communication avec l'orifice de sortie, une deuxième surface d'appui de membrane (45), et une première et une deuxième membranes filtrantes (54,62) disposées sur les première et deuxième surfaces d'appui respectivement, des rainures étant ménagées dans chaque surface d'appui de membrane pour guider le liquide filtré qui a traversé les membranes filtrantes vers l'intérieur, vers l'ouverture centrale du disque support annulaire, les moyens de filtration comportant des moyens d'étanchéité qui définissent un chemin d'écoulement fermé pour le liquide filtré, vers l'orifice de sortie, l'élément filtrant (36) étant caractérisé en ce que
les rainures prévues dans chaque surface d'appui (43,45) comprennent une pluralité de rainures annulaires primaires (50,58) et une pluralité de rainures de collecte radiales principales (56,58) pour collecter le liquide venant des rainures primaires, le disque support annulaire (40) comportant au moins une fente axiale (73) qui fait communiquer une rainure de collecte(56) située dans la première surface d'appui avec une rainure de collecte (68) située dans la deuxième surface d'appui et qui est en communication avec l'ouverture centrale du disque pour former une partie du chemin d'écoulement du liquide filtré,
et en ce qu'il comprend une pièce d'alignement (42) présentant une première et une deuxième surfaces opposées et une ouverture centrale axiale, la première surface s'accouplant avec la deuxième surface du disque support (40) de sorte que l'ouverture centrale axiale est en communication avec l'ouverture axiale du disque support et forme une partie du chemin d'écoulement pour le liquide filtré.

2. Filtre suivant la revendication 1, dans lequel la première surface de la pièce d'alignement comporte une pluralité de nervures radiales (84) qui butent contre la deuxième surface du disque support annulaire pour définir une pluralité de passages s'étendant radialement (88) qui forment une partie du chemin d'écoulement du liquide filtré.

3. Filtre suivant la revendication 1 ou 2, dans lequel la pièce d'alignement comporte, sur sa deuxième surface, des moyens d'empilage qui s'accouplent avec la première surface du disque support d'un autre dit élément filtrant.

4. Filtre suivant la revendication 3, dans lequel les moyens d'empilage comprennent une saillie annulaire (91), prévue sur la deuxième surface de la pièce d'alignement, et un logement annulaire (53) prévu dans la première surface du disque support (30), le logement ayant une configuration telle qu'il peut recevoir la saillie, de sorte que l'élément filtrant peut être empilé avec un ou plusieurs autres dits éléments filtrants.

5. Filtre suivant une quelconque des revendications précédentes, dans lequel la pièce d'alignement (42) comporte des moyens d'alignement pour accouplement avec le disque support annulaire (40), les moyens d'alignement comprenant des butées (94), sur la première surface de la pièce d'alignement,qui viennent en butée contre un épaulement annulaire (67) sur la deuxième surface du disque support.

6. Filtre suivant une quelconque des revendications précédentes, dans lequel la première membrane filtrante (54) est soudée, à ses périphéries extérieure et intérieure, à des parties annulaires respectives (55,47) de la première surface d'appui de membrane (43).

7. Filtre suivant une quelconque des revendications précédentes, dans lequel la deuxième membrane filtrante (62) est soudée, à sa périphérie extérieure, à une partie annulaire (61) de la deuxième surface d'appui de membrane (45) et, à sa périphérie intérieure, à une partie annulaire (92) de la deuxième surface (42) de la pièce d'alignement (42).

8. Filtre suivant une quelconque des revendications précédentes, dans lequel le chemin d'écoulement du liquide filtré comprend un canal annulaire (75) formé entre la périphérie extérieure (89) de la pièce d'alignement et une partie en regard (69) de la deuxième surface (43) du disque support (40).

9. Filtre suivant une quelconque des revendications précédentes, dans lequel les moyens de filtration sont constitués par une pile de deux dits éléments filtrants ou plus, les ouvertures centrales axiales des disques supports et des pièces d'alignement formant une partie du chemin d'écoulement du liquide filtré.
